# FASCICULE DE BREVET EUROPEEN

(11) **EP 0 996 952 B1**
(45) Date de publication et mention de la délivrance du brevet: **22.08.2001**
(21) Numéro de dépôt: 98932201.1
(22) Date de dépôt: 15.06.1998
(51) Int. Cl.: G11B 33/04

(54) **BASE SUPPORT POUR DISQUE COMPACT**
TRÄGERPLATTE FÜR COMPACT DISC
SUPPORT BASE FOR COMPACT DISC

(30) Priorité: 09.07.1997 FR 9708988
(43) Date de publication de la demande: 03.05.2000
(73) Titulaire: MOULAGES DU VELAY S.A., 45300 Ascoux (FR)
(72) Inventeur: MATHIEU, Bruno, 3, chemin des Lilas F-43000 Espaly (FR)
(74) Mandataire: Thivillier, Patrick
(86) Numéro de dépôt international: FR9801246
(87) Numéro de publication internationale: WO9903104

(56) Documents cités:
- WO-A-96/14636
- FR-A- 2 706 671
- FR-A- 2 729 248
- US-A- 4 819 799
- US-A- 5 526 926
- US-A- 5 558 220

## Description

L'invention se rapporte au domaine des boîtiers de rangement, notamment pour disques compacts (DC).

Plus précisément, elle concerne une base support d'un disque compact destinée soit à former directement le fond d'un boîtier de rangement, soit à être incorporée dans un boîtier comprenant un fond sur lequel s'articule un couvercle.

Il existe actuellement différents types de base support de disque compact comportant des moyens de fixation de l'ouverture centrale du disque compact en combinaison avec éventuellement des moyens d'éjection dudit disque compact.
Dans la suite de la description et les revendications, on entend par le terme « base support », un élément plan comportant des moyens de fixation et éventuellement d'éjection d'un disque compact. La base support peut être incorporée dans un boîtier de rangement classique du type comprenant un fond et un couvercle avec éventuellement des moyens de fermeture du couvercle sur le fond.
Selon une autre forme de réalisation, la base support peut former directement le fond d'un boîtier de rangement de disque compact sur lequel s'articule un couvercle.

Quelles que soient leur forme de réalisation, ces bases support comportent différents types de fixation du disque compact. La plupart de ces moyens de fixation ont en commun de coopérer avec l'ouverture centrale du disque compact.

Ces moyens peuvent se présenter sous forme d'une pluralité d'ergots agencés sur la base support, ces ergots étant destinés à enserrer l'ouverture centrale du disque. Dans ce cas, lorsqu'on désire retirer le disque, il est nécessaire de le saisir puis de l'extraire en force de l'emprise des ergots, ce qui conduit, après plusieurs opérations de ce type, à voiler le disque compact.

Pour résoudre ce problème, on a proposé des systèmes permettant successivement la fixation puis l'éjection du disque compact.

Par exemple, le document DE-A-3425579 divulgue un dispositif comprenant trois bras radiaux s'étendant parallèlement et au dessus de la base support, reliés par leur extrémité supérieure par une partie commune formant bouton poussoir. Chaque bras comporte également en regard de la face inférieure du disque des saillies permettant l'éjection du disque compact lorsqu'une pression est exercée sur le bouton poussoir. Ce dispositif présente l'inconvénient d'endommager la surface active du disque compact. Par ailleurs, le coût de fabrication est élevé.

Par « surface active » du disque compact, on désigne la zone d'enregistrement présente sur la face inférieure du disque compact. Généralement, l'enregistrement est effectué sur la totalité de la surface inférieure du disque compact, à l'exception toutefois de sa périphérie externe ainsi que dans la zone avoisinant l'ouverture centrale.

Dans le document EP-A-356 539, on a proposé un moyen de fixation et d'éjection composé d'un bouton poussoir central présentant à sa périphérie une pluralité de bras reliant ledit bouton à la base support du boîtier. Chaque bras présente une forme en saillie, ce qui conduit de même que précédemment à endommager la surface active du disque. En outre, la fabrication de ce type de dispositif ne peut pas être réalisée directement par moulage.

Dans le document WO-A-96/14636, on a cherché à simplifier ce type de système en proposant une base support comprenant des moyens de fixation sous forme de deux bras radiaux s'étendant depuis la base support. L'extrémité de chaque bras présente un élément, formant ensemble un bouton poussoir. Lorsque le disque compact est en position fixe, la bordure du bouton poussoir enserre l'ouverture centrale du disque compact. En revanche, lorsqu'on désire retirer le disque, on exerce une pression sur le bouton poussoir de sorte que les deux éléments précités se rapprochent l'un de l'autre le long de la base support. Le disque vient alors au contact des zones d'appui prévues sur la base support permettant au bouton poussoir de libérer l'ouverture centrale du disque.

Le document FR-A-2706671 divulgue toutes les caractéristiques du préambule de la revendication 1.

Même si ce dispositif est plus simple que ceux connus généralement, il présente néanmoins un coût de fabrication relativement élevé dû au nombre de pièces nécessaires au dispositif de fixation proprement dit.

Le problème que se propose de résoudre l'invention est donc de fournir une base support pour disque compact qui soit très simple dans sa conception tout en permettant un bon centrage dudit disque par rapport aux moyens de fixation.

Un autre but de l'invention est de fournir une base support qui permette de réduire les coûts de fabrication.

Pour résoudre ces problèmes, l'invention propose une base support pour disques telle que définie à la revendication 1.

Cette base support comprend des moyens de fixation par l'ouverture centrale du disque et au moins une zone d'appui destinée à entrer en contact avec une partie du disque compact, la base support comprenant les caractéristiques suivantes :
- la base support présente une découpe délimitant un seul bras déformable élastiquement sous un effort de pression dirigée en direction de ladite base support,
- l'extrémité libre du bras présente un bouton poussoir en une seule pièce,
- le bouton poussoir comporte lesdits moyens de fixation en combinaison avec des moyens de centrage ?
- les moyens de fixation sont tels que sous ledit effort de pression, le bouton poussoir passe en-dessous du plan du disque compact, ce dernier étant en appui sur la zone d'appui afin de libérer l'ouverture centrale du disque,
- après relâchement dudit effort, le bras élastique revient en position initiale en surélevant le disque.

En d'autres termes, l'invention propose une base support comportant des moyens de fixation extrêmement simplifiés par rapport à ceux connus jusqu'alors en mettant en oeuvre une base support comportant un seul bras en combinaison avec des moyens de centrage.

Il n'était pas évident de proposer un système comportant un seul bras compte tenu du fait que l'état de la technique et notamment le document WO 96/14636, décrivait l'utilisation d'un système de fixation comprenant au moins deux bras à l'extrémité desquels étaient agencés un bouton poussoir en deux parties, permettant d'assurer le centrage du disque compact.

La mise en oeuvre d'un seul bras est rendue possible par la combinaison de celui-ci avec des moyens de centrage.

Ainsi, selon une première forme de réalisation, les moyens de centrage se présentent sous forme d'au moins une portion verticale dirigée vers le bas et agencée à la périphérie du bouton poussoir dans la zone diamétralement opposée audit bras, ladite portion verticale étant destinée à centrer le disque compact lorsqu'on exerce une pression sur le bouton poussoir.

Selon une autre forme de réalisation, les moyens de centrage se présentent sous forme d'au moins un bossage vertical issu de la base support et coopérant avec une découpe réalisée à la périphérie du bouton poussoir dans la zone diamétralement opposée audit bras, pour centrer le disque compact lorsqu'on exerce une pression sur le bouton poussoir.

Pour que le plan du bouton poussoir soit parallèle ou sensiblement parallèle à celui de la base support et ce, quelle que soit la position du bras par rapport à la base support, le bouton poussoir se présente sous forme d'un disque dont une partie de la périphérie interne est reliée à l'extrémité libre du bras par un segment vertical.

Pour permettre la fixation de l'ouverture centrale du disque, lesdits moyens de fixation se présentent sous forme d'une collerette agencée sur une partie de la périphérie du bouton poussoir en regard du bras.

Pour qu'en position fixe, aucune partie de la base support ne soit en contact avec les parties actives de la face inférieure du disque compact, l'inclinaison du bras par rapport au plan de la base support est d'environ 15°.

Afin de procéder à l'éjection du disque sans pour autant que la partie active ne soit endommagée, la zone d'appui se présente sous forme d'un rebord continu apte à coopérer avec la périphérie interne du disque compact.

Selon une autre forme de réalisation, la zone d'appui est discontinue.

En pratique, lorsqu'on désire fixer le disque sur sa base support, on positionne l'ouverture centrale de celui-ci sur le bouton poussoir, puis on exerce une pression sur la surface supérieure du disque pour que la collerette ci-avant décrite enserre l'ouverture centrale du disque. Le disque se trouve alors positionné à une certaine distance de la base support de sorte que sa partie active n'est pas endommagée.

Lorsqu'on désire retirer le disque, on exerce une pression sur le bouton poussoir en direction de la base support jusqu'à ce que la périphérie du disque soit en contact avec les zones d'appui précitées. Sous l'effet de la pression, le disque compact se voile légèrement de sorte que les moyens de fixation libèrent son ouverture centrale.
Lorsqu'on stoppe la pression exercée au niveau du bouton poussoir, celui-ci revient dans sa position initiale et le disque est alors présenté à l'utilisateur sur le bouton poussoir.

La base support du disque compact peut être fabriquée directement par moulage.

L'invention et les avantages qu'elle apporte seront cependant mieux compris grâce aux exemples de réalisation donnés ci-après à titre indicatif, mais non limitatif, et qui sont illustrés par les schémas annexés dans lesquels :
la figure 1 est une vue en coupe de la base support de l'invention lorsqu'aucune pression n'est exercée sur le bouton poussoir ;
la figure 2 est une vue en coupe de la base support de l'invention lorsqu'une pression est exercée sur le bouton poussoir ;
la figure 3 est une vue en coupe de la base support de l'invention lorsque la pression au niveau du bouton poussoir est relâchée ;
la figure 4 est une vue de dessus de la base support de l'invention
la figure 5 est une coupe d'un autre mode de réalisation de la base support de l'invention lorsqu'aucune pression n'est exercée sur le bouton poussoir ;
la figure 6 est une coupe selon le même mode de réalisation lorsqu'une pression est exercée sur le bouton poussoir ;
la figure 7 est une vue de dessus du deuxième mode de réalisation de la base support.

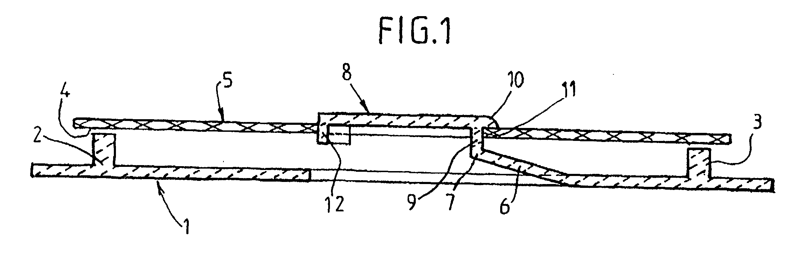

On désigne par la référence générale (1) la base support caractéristique de l'invention. Comme le montre la figure 1, cette base support comprend des zones d'appui (2,3) situées en regard de la face interne (4) du disque compact (5). Avantageusement, ces zones d'appui sont situées en regard de la périphérie du disque compact (5).

La base support (1) présente également une découpe délimitant un bras (6) déformable élastiquement lorsqu'une pression est exercée en direction de la base support. L'extrémité libre (7) du bras (6) présentant un bouton poussoir désigné par la référence générale (8). Le bras présente avantageusement une forme rectangulaire. Néanmoins, il peut présenter d'autres formes géométriques aptes à être déformables élastiquement.

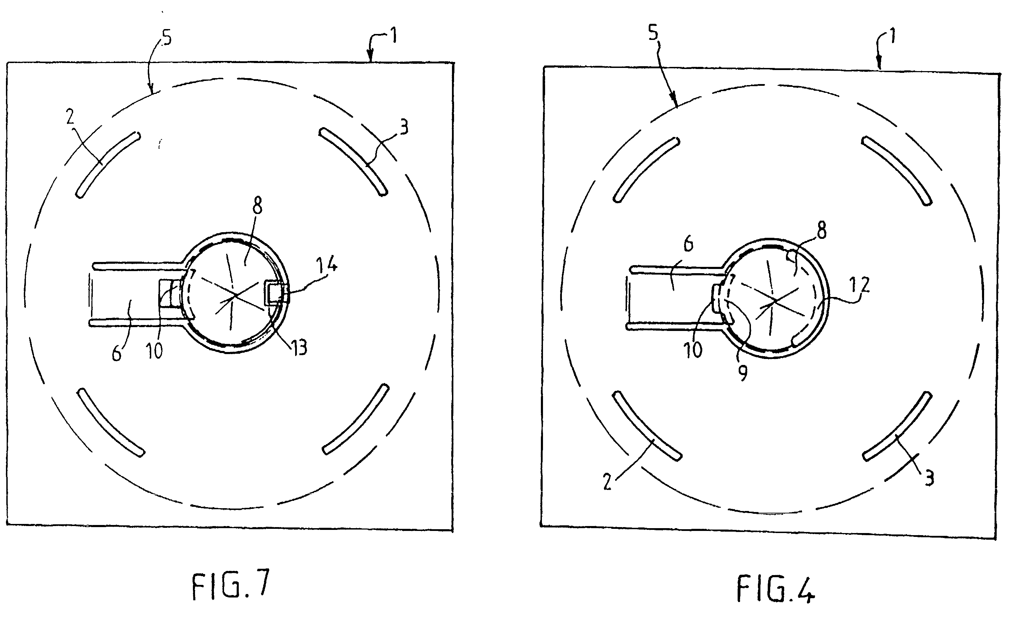

Comme le montre la figure 4, le bouton poussoir (8) a une forme générale circulaire dont partie de la périphérie interne est reliée à l'extrémité (7) du bras par un segment vertical (9).
Le bouton poussoir (8) présente en outre des moyens de fixation sous la forme par exemple d'au moins une collerette (10) agencée sur partie de sa périphérie en regard du bras (6). Cette collerette est destinée à enserrer la face externe (11) du disque (5) au niveau de son ouverture centrale (voir figure 1).

Il apparaît donc que cette collerette constitue d'une manière avantageuse une seule zone de retenue du disque. On n'exclut pas cependant plusieurs points de retenue. En outre, la base support présente, en combinaison avec les moyens de retenue du disque, des moyens de centrage.

Selon une première forme de réalisation, les moyens de centrage sont agencés à la périphérie du bouton poussoir (8) dans la zone diamétralement opposée au bras (6) sous forme d'une portion verticale (12) destinée à centrer le disque compact lorsqu'on exerce une pression P sur le bouton poussoir (8).

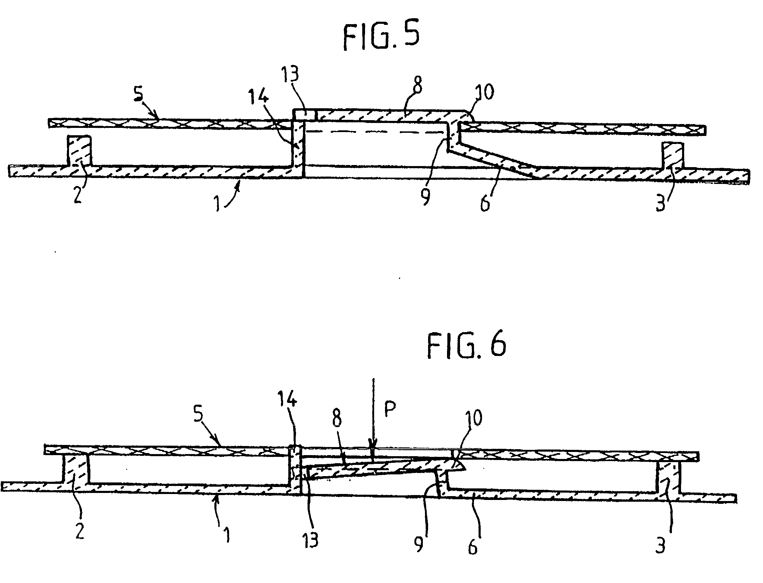

Selon une seconde forme de réalisation, les moyens de centrage sont réalisés d'un bossage (14) vertical issu de la base support (1) (figures 5 et 7) et coopérant avec une découpe (13) que présente la périphérie du bouton poussoir dans la zone diamétralement opposée au bras (6).

Avantageusement, l'inclinaison du bras (6) par rapport au plan de la base support (2), correspond à un angle α d'une valeur de 15° au moins environ.

Sur les figures 1, 2 et 3, on a représenté les différentes positions du disque et du bouton poussoir lorsqu'on exerce une pression sur ce dernier.

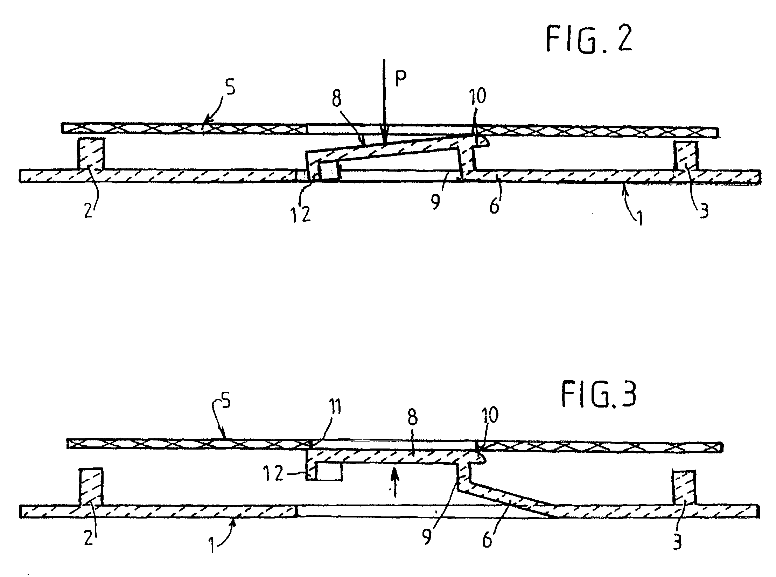

Plus précisément, comme le montre la figure 2, lorsque la périphérie interne du disque compact entre en contact avec les zones d'appui périphériques, le bouton poussoir passe en dessous du plan du disque compact de sorte à libérer son ouverture centrale.
Lorsqu'on relâche la pression au niveau du bouton poussoir, le bras élastique revient alors dans sa position initiale permettant de présenter le disque.
Bien entendu, cette base support est réalisée directement par moulage, de préférence en matière plastique.

L'invention présente donc l'avantage de proposer une base support de disque compact extrêmement simple aussi bien dans sa conception que dans son utilisation. De plus, elle est conçue de sorte à ne pas endommager la surface active du disque compact.

## Revendications

1. Base support (1) pour disque (5), notamment pour disque compact (5), comprenant des moyens de fixation (9, 10, 12) par l'ouverture centrale du disque (5) et au moins une zone d'appui (2, 3) destinée à entrer en contact avec une partie du disque compact (5), la base support comprenant les caractéristiques suivantes :
- la base support présente une découpe délimitant un seul bras (6) déformable élastiquement sous un effort de pression (P) dirigée en direction de ladite base support (1),
- l'extrémité libre (7) du bras (6) présente un bouton poussoir (8) en une seule pièce,
la base support étant caractérisée en ce que :
- le bouton poussoir comporte lesdits moyens de fixation (10) en combinaison avec des moyens de centrage (9, 12),
- les moyens de fixation sont tels que sous ledit effort de pression (P), le bouton poussoir (8) passe en-dessous du plan du disque compact (5), ce dernier étant en appui sur la zone d'appui afin de libérer l'ouverture centrale du disque,
- après relâchement dudit effort, le bras élastique (6) revient en position initiale en surélevant le disque.

2. Base support(1) selon la revendication 1, caractérisée en ce que les moyens de centrage (9,12) comportent au moins une portion verticale (12) agencée à la périphérie du bouton poussoir (8) dans la zone diamétralement opposée audit bras (6), ladite portion verticale (12) étant destinée à centrer le disque (5) lorsqu'on exerce une pression (P) sur le bouton poussoir (8).

3. Base support (1) selon la revendication 1, caractérisée en ce que les moyens de centrage (9) comportent au moins un bossage vertical (14) issu de la base support (1) et coopérant avec une découpe (13) réalisée à la périphérie du bouton poussoir (8) dans la zone diamétralement opposée audit bras (6), pour centrer le disque lorsqu'on exerce une pression (P) sur le bouton poussoir (8).

4. Base support (1) selon l'une des revendications précédentes, caractérisée en ce que le bouton poussoir (8) a une forme générale circulaire dont partie de la périphérie interne est reliée à l'extrémité libre (7) du bras (6) par un segment vertical (9).

5. Base support (1) selon la revendication 1, caractérisée en ce que lesdits moyens de fixation se présentent sous forme d'au moins une collerette (10) agencée sur partie de la périphérie du bouton poussoir (8) en regard du bras (6).

6. Base support (1) selon l'une des revendications précédentes, caractérisée en ce que l'inclinaison du bras (6) par rapport au plan de la base support (1) est d'environ 15°.

7. Base support (1) selon l'une des revendications précédentes, caractérisée en ce que la zone d'appui (2, 3) se présente sous forme d'un rebord continu apte à coopérer avec la périphérie du disque (5).

8. Base support (1) selon l'une des revendications précédentes, caractérisée en ce que la zone d'appui (2, 3) se présente sous forme d'un rebord discontinu apte à coopérer avec la périphérie du disque (5).

9. Base support selon l'une des revendications précédentes, caractérisée en ce qu'elle est fabriquée directement par moulage.

## Patentansprüche

1. Unterlage (1) für Scheibe (5), insbesondere für Compactdisc (5), mit Befestigungsmitteln (9, 10, 12) durch die Mittelöffnung der Scheibe (5) und mit mindestens einer Auflagefläche (2, 3) zur Herstellung des Kontakts mit einem Teil der Compactdisc (5), wobei die Unterlage folgende Merkmale besitzt:
- die Unterlage weist einen Ausschnitt auf, der einen einzigen Arm (6) begrenzt, welcher unter Einwirkung einer auf die Unterlage (1) hin gerichteten Druckkraft (P) elastisch verformbar ist,
- das freie Ende (7) des Armes (6) weist einen einstückig ausgeformten Taster (8) auf, wobei die Unterlage dadurch gekennzeichnet ist, dass
- der Taster die besagten Befestigungsmittel (10) in Verbindung mit Zentriereinrichtungen (9, 12) umfasst,
- die Befestigungsmittel so beschaffen sind, dass der Taster (8) unter Einwirkung der Druckkraft (P) unter die Ebene der Compactdisc (5) gelangt, wobei letztere auf der Auflagefläche aufliegt, um die Mittelöffnung der Scheibe freizugeben,
- der elastische Arm (6) nach dem Nachlassen der Kraft auf die Ausgangsposition zurückkehrt und dabei die Scheibe überhöht.

2. Unterlage (1) nach Anspruch 1, dadurch gekennzeichnet, dass die Zentriereinrichtungen (9, 12) mindestens einen senkrechten Abschnitt (12) besitzen, der am Rande des Tasters (8) in der dem Arm (6) diametral entgegengesetzten Zone angeordnet ist, wobei der senkrechte Abschnitt (12) dazu dient, die Scheibe (5) zu zentrieren, wenn auf den Taster (8) ein Druck (P) ausgeübt wird.

3. Unterlage (1) nach Anspruch 1, dadurch gekennzeichnet, dass die Zentriereinrichtungen (9) mindestens eine aus der Unterlage (1) hervorgehende senkrechte Erhöhung (14) besitzen und mit einem Ausschnitt (13) am Rande des Tasters (8) in der dem Arm (6) diametral entgegengesetzten Zone zusammenwirken, um die Scheibe zu zentrieren, wenn auf den Taster (8) -ein Druck (P) ausgeübt wird.

4. Unterlage (1) nach einem der vorstehenden Ansprüche, dadurch gekennzeichnet, dass der Taster (8) eine allgemein kreisartige Form besitzt, wobei ein Teil des inneren Randes über ein senkrechtes Segment (9) mit dem freien Ende (7) des Armes (6) verbunden ist.

5. Unterlage (1) nach Anspruch 1, dadurch gekennzeichnet, dass die Befestigungsmittel in Form mindestens eines Bundes (10) ausgelegt sind, der an einem Teil des Tasterumfangs (8) gegenüber dem Arm (6) ausgebildet ist.

6. Unterlage (1) nach einem der vorstehenden Ansprüche, dadurch gekennzeichnet, dass die Neigung des Armes (6) gegenüber der Ebene der Unterlage (1) ca. 15° beträgt.

7. Unterlage (1) nach einem der vorstehenden Ansprüche, dadurch gekennzeichnet, dass die Auflagefläche (2, 3) die Form einer ununterbrochenen überstehenden Kante aufweist, die geeignet ist, mit dem Rand der Scheibe (5) zusammenzuwirken.

8. Unterlage (1) nach einem der vorstehenden Ansprüche, dadurch gekennzeichnet, dass die Auflagefläche (2, 3) die Form einer unterbrochenen überstehenden Kante aufweist, die geeignet ist, mit dem Rand der Scheibe (5) zusammenzuwirken.

9. Unterlage nach einem der vorstehenden Ansprüche, dadurch gekennzeichnet, dass sie direkt durch Formguss hergestellt wird.

## Claims

1. Supporting base (1) for a disc (5), such as a compact disc (5), comprising fixing means (9, 10, 12) acting in the central opening of the disc (5) and at least one bearing area (2, 3) designed to come into contact with part of the compact disc (5), the supporting base comprising the following characteristics:
- the supporting base has a cutout defining a single arm (6) that deforms elastically under a pressure load (P) directed towards the said supporting base (1), and
- the free end (7) of the arm (6) has a push-button (8) made in one piece,
the supporting base being characterized in that:
- the push-button comprises the said fixing means (10) in combination with centring means (9, 12),
- the fixing means are such that, under the said pressure load (P), the push-button (8) passes beneath the plane of the compact disc (5), and the latter rests on the bearing area in order to free the central opening of the disc, and
- after the said load is released, the spring arm (6) returns to its initial position, lifting the disc in the process.

2. Supporting base (1) according to Claim 1, characterized in that the centring means (9, 12) comprise at least one vertical portion (12) situated at the edge of the push-button (8) in the area diametrically opposite the said arm (6), the said vertical portion (12) being designed to centre the disc (5) when a pressure (P) is applied to the push-button (8).

3. Supporting base (1) according to Claim 1, characterized in that the centring means (9) comprise at least one vertical boss (14) rising from the supporting base (1) and fitting into a cutout (13) at the edge of the push-button (8) in the area diametrically opposite the said arm (6), in order to centre the disc when a pressure (P) is applied to the push-button.

4. Supporting base (1) according to one of the preceding claims, characterized in that the push-button (8) is of a generally circular shape in which part of the inner edge is connected to the free end (7) of the arm (6) by a vertical segment (9).

5. Supporting base (1) according to Claim 1, characterized in that the said fixing means take the form of at least one collar (10) on part of the edge of the-push-button (8) next to the arm (6).

6. Supporting base (1) according to one of the preceding claims, characterized in that the angle of the arm (6) relative to the plane of the supporting base (1) is about 15°.

7. Supporting base (1) according to one of the preceding claims, characterized in that the bearing area (2, 3) is in the form of a continuous ridge capable of acting on the edge of the disc (5).

8. Supporting base (1) according to one of the preceding claims, characterized in that the bearing area (2, 3) is in the form of a discontinuous ridge capable of acting on the edge of the disc (5).

9. Supporting base according to one of the preceding claims, characterized in that it is manufactured directly by moulding.
